# EUROPÄISCHE PATENTANMELDUNG

(11) **EP 1 903 434 A1**
(43) Veröffentlichungstag der Anmeldung: **26.03.2008**
(21) Anmeldenummer: 06019894.2
(22) Anmeldetag: 22.09.2006
(51) Int. Cl.: G06F 9/44

(54) **Verfahren zur erzeugung eines softwarecodes**

(71) Anmelder: SIEMENS AKTIENGESELLSCHAFT, 80333 München (DE)
(72) Erfinder: Burger, Thomas, Dr., 93051 Regensburg (DE); Kunze, Marco, Dr., 93051 Regensburg (DE)

(57) **Zusammenfassung**

Ein einfaches Verfahren zur Erzeugung eines Softwarecodes (C), welches eine Variantenauswahl auch noch zum Zeitpunkt der Kompilierung (comp) des Softwarecodes (C) in einen Maschinencode (MA, MB, MC) ermöglicht, umfasst folgende Schritte: (a) Identifizierung von symbolischen Platzhaltern in einem Funktionsmodell (MOD) enthaltend wenigstens einen symbolischen Platzhalter für einen numerischen Wert zur numerischen Kodierung mehrerer Varianten des Funktionsmodells; (b) Zuweisung von Werten für die symbolischen Platzhalter; (c) Erzeugung eines variantenspezifischen Softwarecodes (C1) basierend auf der Wertzuweisung von Schritt b) ; (f) Analyse des in Schritt c) erzeugten Softwarecodes (C1) zur Lokalisierung der Variantenspezifika; und (g) Einfügung von Softwarecode-Platzhaltern an den in Schritt f) lokalisierten Positionen im in Schritt c) erzeugten Softwarecode (C1) . Damit können vorteilhaft die Vorteile einer herkömmlichen manuellen Kodierung mit den Vorteilen einer herkömmlichen automatischen Codegenerierung kombiniert werden.

## Beschreibung

Die vorliegende Erfindung betrifft ein Verfahren zur Erzeugung eines Softwarecodes, aus welchem durch Kompilierung ein Maschinencode für eine mikroprozessorgesteuerte Einrichtung, insbesondere für ein Steuergerät einer Brennkraftmaschine, erzeugbar ist.

Steuergeräte für komplexere technische Einrichtungen wie z. B. eine moderne Brennkraftmaschine sind üblicherweise als mikroprozessorgesteuerte elektronische Einrichtungen ("ECU") ausgebildet, in welchen eine Vielzahl von Funktionalitäten für die Steuerung der technischen Einrichtung durch eine im Steuergerät ablaufende Steuergerät-Software (Maschinencode) implementiert sind.

Funktionalitäten beziehen sich zumeist auf eine programmgesteuerte Berechnung von Ausgangsdaten basierend auf bestimmten Eingangsdaten, wobei die Eingangsdaten beispielsweise von dem Steuergerät zugeführten Sensorsignalen oder den Ausgangsdaten einer anderen Funktionalität gebildet sein können.

Gemäß eines auf betrieblichen Kenntnissen der Anmelderin beruhenden internen Stand der Technik für die Entwicklung von Motorsteuergeräten bzw. die Entwicklung von Funktionalitäten solcher Motorsteuergeräte wurde in der Vergangenheit beispielsweise eine "manuelle Kodierung" eingesetzt, bei welcher der Softwarecode in einer Hochsprache (z. B. Programmiersprache C) von einem oder mehreren Entwicklern geschrieben wird. Aus diesem Softwarecode kann dann durch Kompilierung ein Maschinencode erzeugt werden, den der Prozessor (Mikrocontroller) des Motorsteuergeräts direkt ausführen kann.

Motorsteuergeräte bzw. deren Funktionalitäten sind in der Praxis oftmals an die spezielle zu steuernde technische Einrichtung anzupassen. Dementsprechend ist es wünschenswert, wenn bei der Erzeugung des Softwarecodes bzw. der Erzeugung des Maschinencodes durch Kompilierung des Softwarecodes eine gewisse "Variabilität" in dem Sinne gewahrt bleibt, dass mit geringem Aufwand für den Entwickler letztlich verschiedene Varianten des Maschinencodes erzeugbar sind.

Bei der manuellen Kodierung wurden zur Aufwandsreduktion in verschiedenen Algorithmen Varianten durch Einführung von symbolischen Platzhaltern und die Definition eines Wertebereiches für die symbolischen Platzhalter codiert. Damit können die benötigten Varianten in ein und derselben Softwarecodedatei vorgehalten werden. Aus diesen somit vordefinierten Varianten kann dann durch Setzen von numerischen Werten bestimmter Größen die für den aktuellen Anwendungsfall passende Variante ausgewählt werden. Diese Auswahl kann hierbei zum Zeitpunkt des Kompilierens des Softwarecodes erfolgen und sich z. B. auf die Auswahl einzelner Datenattribute, die Auswahl von Grenzen von Schleifenkonstrukten oder die Auswahl gesamter Softwarecodeteile beziehen.

Die manuelle Kodierung ist in der Praxis mit relativ großem Aufwand verbunden. Ebenfalls gemäß eines auf betrieblichen Kenntnissen der Anmelderin beruhenden internen Stand der Technik wurde daher bereits eine "automatische Codegenerierung" eingesetzt. Hierzu wird vom Entwickler zunächst softwareunterstützt ein Funktionsmodell der gewünschten Steuergerätfunktionalitäten festgelegt. Hierfür stehen dem Entwickler beispielsweise kommerziell erhältliche Softwarewerkzeuge wie die Produktfamilie "Matlab/Simulink/Stateflow" und die Produktfamilie "ASCET" zur Verfügung, mittels welchen technische Systeme mit Hilfe grafischer Blöcke modelliert werden können und ein damit festgelegtes Funktionsmodell automatisiert, mittels eines "Codegenerators" in einen hochsprachlichen Softwarecode (z. B. Programmiersprache C) umgewandelt werden kann.

Wenngleich der Einsatz kommerzieller Codegeneratoren den Aufwand zur Erzeugung des Softwarecodes beträchtlich verringert, so besteht ein Nachteil dieser Methode darin, dass die Konfiguration bereits vollständig auf Basis des Funktionsmodells festgelegt wird. Selbst wenn das Funktionsmodell symbolische Platzhalter für numerische Werte zur numerischen Kodierung mehrerer Varianten des Funktionsmodells enthält, so werden bei der automatischen Erzeugung des Codes durch den Codegenerator die numerischen Werte evaluiert und auf Basis der somit festgelegten Werte der entsprechende Code generiert. Auf diese Weise kann zwar genau der Code generiert werden, der auch wirklich der passenden Variante entspricht. Eine Auswahl der Variante zum Zeitpunkt der Kompilierung und damit eine der manuellen Kodierung entsprechende Vorgehensweise ist jedoch nicht mehr möglich, da grundsätzlich alle numerischen Variantenkodierungen im Code bereits aufgelöst bzw. durch den ausgewählten numerischen Wert ersetzt sind. Eine Ausnahme hiervon stellt der Fall dar, dass manche Variantenkodierungen als Input-Parameter/-Variablen realisiert sind. In diesem Fall würde keine sofortige Auflösung erfolgen. Die bei der manuellen Kodierung mögliche Variantenkodierung wird für die am Markt erhältlichen Codegeneratoren nicht unterstützt.

Die bislang einzige Lösung des vorstehend erläuterten Problems ist eine Variantenauswahl auf Basis des Funktionsmodells und die nachfolgende variantenspezifische Codegenerierung. Mit anderen Worten wird hierbei für jede mögliche numerische Belegung der Variantenauswahl der Code separat generiert (z. B. Erzeugung einer C-Datei), der dann im Weiteren für die entsprechende Variante von Steuergerät bzw. Steuergerätfunktionalitäten verwendet werden kann.

Es ist eine Aufgabe der vorliegenden Erfindung, ein Verfahren zur Erzeugung eines Softwarecodes, insbesondere eines hochsprachlichen Softwarecodes, anzugeben, welches es mit geringem Aufwand ermöglicht, eine Variantenauswahl auch noch zum Zeitpunkt der Kompilierung des Softwarecodes in einen Maschinencode zu treffen.

Diese Aufgabe wird gemäß der Erfindung durch ein Verfahren mit den Merkmalen des Anspruchs 1 gelöst. Die abhängigen Ansprüche betreffen vorteilhafte Weiterbildungen der Erfindung.

Das erfindungsgemäße Verfahren zur Erzeugung eines Softwarecodes, aus welchem durch Kompilierung ein Maschinencode für eine mikroprozessorgesteuerte Einrichtung, insbesondere für ein Steuergerät einer Brennkraftmaschine, erzeugbar ist, basierend auf einem Funktionsmodell enthaltend wenigstens einen symbolischen Platzhalter für einen numerischen Wert zur numerischen Kodierung mehrerer Varianten des Funktionsmodells, umfasst die Schritte:
a) Identifizierung der symbolischen Platzhalter in dem Funktionsmodell,
b) Zuweisung von Werten für die symbolischen Platzhalter,
c) Erzeugung eines variantenspezifischen Softwarecodes basierend auf der Wertzuweisung von Schritt b),
f) Analyse des in Schritt c) erzeugten Softwarecodes zur Lokalisierung der Variantenspezifika, und
g) Einfügung von Softwarecode-Platzhaltern an den in Schritt f) lokalisierten Positionen im in Schritt c) erzeugten Softwarecode.

Durch dieses Verfahren wird es auch für die bereits am Markt erhältlichen Codegeneratoren ermöglicht, einen oder mehrere numerische Platzhalter in den generierten Softwarecode einzufügen und damit mit dem durch die automatische Codegenerierung erzeugten Softwarecode genauso zu verfahren wie mit manuell generiertem Softwarecode.

Vorteilhaft kann vorgesehen sein, dass für die Gesamtheit der Varianten lediglich ein einziger Softwarecode bzw. eine einzige Softwarecodedatei erzeugt wird, welche die entsprechenden Softwarecode-Platzhalter enthält, wobei zum Zeitpunkt der Kompilierung eine Wertzuweisung (Konfiguration) erfolgen kann, um die gewünschte bzw. passende Variante zu wählen.

Die in dem obigen Schritt b) vorgesehene Zuweisung von Werten für die symbolischen Platzhalter des Funktionsmodells kann so vorgesehen sein, dass diese Werte im gesamten Modell bzw. später erzeugten Softwarecode eindeutig bzw. "einzigartig" sind. Dies kann z. B. durch eine Analyse des Funktionsmodells und der dort bereits verwendeten numerischen Werte realisiert werden. In einer Ausführungsform ist vorgesehen, dass der Schritt b) wenigstens teilweise automatisiert erfolgt, also hierzu z. B. das Funktionsmodell durch eine spezielle Software analysiert wird, um solche eindeutigen Werte aufzufinden.

Die in Schritt c) vorgesehene Erzeugung des variantenspezifischen Softwarecodes basierend auf der Wertzuweisung von Schritt b) ist gemäß einer Ausführungsform wenigstens teilweise, insbesondere vollständig automatisiert vorgesehen. Hierfür kann beispielsweise ein kommerziell erhältlicher Codegenerator oder dergleichen eingesetzt werden.

Auch die in Schritt f) vorgesehene Analyse des in Schritt c) erzeugten Softwarecodes ist gemäß einer bevorzugten Ausführungsform wenigstens teilweise, insbesondere vollständig automatisiert vorgesehen. Das gleiche gilt für die nachfolgend in Schritt g) vorgesehene Einfügung von Softwarecode-Platzhaltern im erzeugten Softwarecode.

In einer vorteilhaften Weiterbildung der Erfindung umfasst das Verfahren folgende Schritte:
a) Identifizierung der symbolischen Platzhalter in dem Funktionsmodell,
b) Zuweisung von ersten Werten für die symbolischen Platzhalter,
c) Erzeugung eines ersten variantenspezifischen Softwarecodes basierend auf der Wertzuweisung von Schritt b),
d) Zuweisung von zweiten Werten für die symbolischen Platzhalter, die von den ersten Werten verschieden sind,
e) Erzeugung eines zweiten variantenspezifischen Softwarecodes basierend auf der Wertzuweisung von Schritt d),
f) Vergleich der in den Schritten c) und e) erzeugten Softwarecodes zur Lokalisierung der Variantenunterschiede, und
g) Einfügung von Softwarecode-Platzhaltern an den in Schritt f) lokalisierten Positionen im in Schritt c) erzeugten Softwarecode.

Bei dieser Weiterbildung werden in zusätzlichen Schritten d) und e) gewissermaßen die obigen Schritte b) und c) mindestens ein Mal wiederholt, dies jedoch mit einer anderen Wertzuweisung. Selbstverständlich können die Wertzuweisungs- und Codeerzeugungsschritte hierbei mehr als ein Mal wiederholt werden.

Sodann werden gemäß dieser Weiterbildung in einem modifizierten Schritt f) die Variantenunterschiede der in den Schritten c) und e) erzeugten Softwarecodes lokalisiert. Dies ist in der Praxis oftmals einfacher zu bewerkstelligen als die Lokalisierung der Variantenspezifika bei dem oben erläuterten Verfahren mit nur einer Wertzuweisung.

Der im Zusammenhang mit dem Schritt f) verwendete Begriff "Variantenunterschiede" soll im Sinne der Erfindung auch den prinzipiell denkbaren Fall umfassen, dass für eine oder mehrere bestimmte Wertzuweisungen irgendwelche Code-Teile bei der Codeerzeugung (z. B. bei Verwendung eines kommerziell erhältlichen Codegenerators) "wegoptimiert" werden, wohingegen für eine oder mehrere andere Wertzuweisungen lediglich bestimmte Code-Teile verändert werden. Die Wegoptimierung von Code-Teilen kann jedoch im Analyseschritt f) erkannt und somit im Rahmen der Erfindung ohne weiteres gehandhabt werden.

Die in Schritt d) vorgesehene zweite Wertzuweisung wird bevorzugt wenigstens teilweise, insbesondere vollständig automatisiert durchgeführt. In der Praxis kann hierfür ein geeigneter Algorithmus verwendet werden, der es ermöglicht, selbst nach der Auflösung der symbolischen Platzhalter und der Wertzuweisung auch für Kombinationen der symbolischen Platzhalter eine eindeutige Zuweisung zu bestimmen.

Im Bereich der Steuerungsfunktionalitäten eines Motorsteuergeräts ist eine häufig auftretende Kombination beispielsweise die Multiplikation der durch die symbolischen Platzhalter repräsentierten Werte (z. B. bei der Aufsummierung der Elemente einer Matrix).

Bei der Weiterbildung der Erfindung können in Schritt b) alle den symbolischen Platzhalter zugewiesenen numerischen Werte z. B. als 1 festgelegt werden, woraufhin in Schritt d) die numerischen Werte dann derart festgelegt werden, dass diese in dem in Schritt c) erzeugten Softwarecode noch nicht vorkommen und unter den numerischen Werten der symbolischen Platzhalter eindeutig sind.

In einer besonders vorteilhaften Ausführungsform ist vorgesehen, dass das Funktionsmodell mehrere symbolische Platzhalter enthält, denen in Schritt d) zweite Werte zugewiesen werden, die sich von den ersten Werten jeweils durch einen bestimmten Faktor unterscheiden, wobei die Faktoren teilerfremd gewählt werden. Damit ist es möglich, multiplikative Kombinationen verschiedener symbolischer Platzhalter im erzeugten Softwarecode wieder eindeutig aufzulösen bzw. zu lokalisieren.

Im einfachsten Fall werden bei dieser Ausführungsform für die zweite Wertzuweisung voneinander verschiedene Primzahlen verwendet.

Dies sei an einem Beispiel veranschaulicht: Für drei angenommene symbolische Platzhalter "NC_A", "NC_B" und "NC_C" können z. B. folgende Werte in Schritt b) festgelegt werden: NC_A = 1, NC_B = 1 und NC_C =1. Für den Schritt d) können dann folgende Werte festgelegt werden: NC_A = 2, NC_B = 3 und NC_C =5.

Es werden dann in Schritt f) die Unterschiede der in Schritt c) und e) erzeugten Softwarecodes (z. B. C-Dateien) analysiert. Bei Auffinden von unterschiedlichen Zahlenwerten in den beiden Codes werden die entsprechenden Werte für die erzeugten Softwarecodes in ihre Primfaktoren zerlegt. Entsprechen diese Faktoren den zugewiesenen symbolischen Werten, so werden die entsprechenden Softwarecode-Platzhalter an die entsprechenden Positionen im Softwarecode eingesetzt (Schritt g).

Durch die Erfindung wird es vorteilhaft möglich, mit kommerziell verfügbaren Codegeneratoren automatisiert Softwarecodes enthaltend Softwarecode-Platzhalter zur Variantenkodierung zu erzeugen. Damit kann automatisch generierter Softwarecode mit demselben Prozess implementiert bzw. kompiliert werden wie manuell generierter Softwarecode. Für die Behandlung von verschiedenen Varianten muss dann nicht mehr jedes mal ein neuer Ansatz in den Entwicklungsprozess eingefügt werden, was ein Nebeneinander von manuell und automatisch erzeugtem Softwarecode in einem Projekt erleichtert bzw. sogar erst ermöglicht.

Wie es oben bereits erläutert wurde, kann die Erfindung in der Weise vorgesehen sein, dass eine einmalige Erzeugung des Codes in Schritt c) mit einer vorherigen eindeutigen Wertzuweisung in Schritt b) für jeden Platzhalter erfolgt. Hierzu ist es erforderlich und im Allgemeinen relativ aufwendig, zuvor die Verwendung des oder der entsprechenden Werte durch eine Analyse aller im Funktionsmodell verwendeter Werte auszuschließen. Daher ist in der Praxis zumeist die oben ebenfalls erläuterte Ausführung bzw. Weiterbildung zweckmäßiger, bei welcher durch das zweimalige (oder noch öftere) Erzeugen des Softwarecodes, nämlich durch die Schritte c) und e), in einfacher Weise ermöglicht wird, eine Änderung im Code eindeutig der Änderung der Wertzuweisung der symbolischen Platzhalter zuzuordnen. Es kann eine 1:1-Zuordnung von Modell und generiertem Code erfolgen. Der Code und das Modell können einmalig archiviert werden. Trotzdem kann jeder erzeugte Code alle vom Modell abgedeckten Varianten unterstützen.

Die Erfindung wird nachfolgend anhand von Ausführungsbeispielen mit Bezug auf die beigefügten Zeichnungen weiter beschrieben. Es stellen jeweils schematisch dar:
- Fig. 1: ein Blockdiagramm zur Veranschaulichung einer herkömmlichen manuellen Kodierung,
- Fig. 2: ein Blockdiagramm zur Veranschaulichung einer herkömmlichen automatischen Codegenerierung, und
- Fig. 3: ein Blockdiagramm zur Veranschaulichung eines Ausführungsbeispiels gemäß der Erfindung.

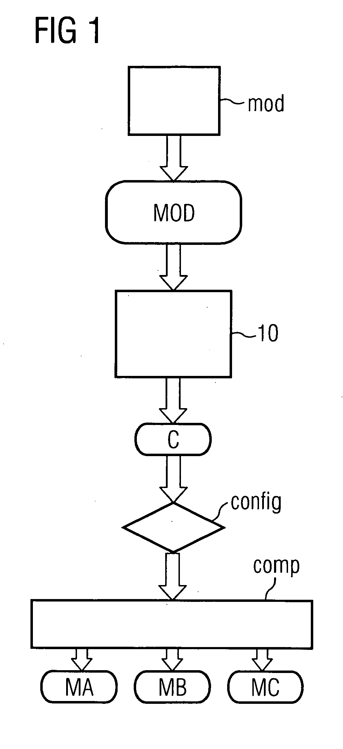

Fig. 1 veranschaulicht eine herkömmliche Methode zur Erzeugung eines hochsprachlichen Softwarecodes C, bei welchem es sich z. B. um Software handeln kann, die in der Programmiersprache "C" oder dergleichen formuliert ist. Der Softwarecode C soll im dargestellten Beispiel die Funktionalitäten eines mikroprozessorgesteuerten Motorsteuergeräts für eine Brennkraftmaschine im Automobilbereich implementieren.

Zunächst wird von einem Entwickler in einem Schritt mod ein Funktionsmodell MOD entwickelt, getestet und festgelegt.

In einem nächsten Schritt 10 erfolgt dann eine manuelle Kodierung des zuvor festgelegten Modells MOD durch den Entwickler selbst. Der resultierende Softwarecode C wird also durch den Entwickler selbst geschrieben.

Um den Programmieraufwand zur Erzeugung von Varianten einzelner Funktionalitäten des Motorsteuergeräts (z. B. für eine Verwendung des Motorsteuergeräts bei verschiedenen Typen von Brennkraftmaschinen) gering zu halten, bezieht der Entwickler bei der Entwicklung des Modells MOD im Schritt mod symbolische Platzhalter in das Funktionsmodell MOD ein, mittels welchen eine numerische Kodierung mehrerer Varianten des Funktionsmodells erfolgt.

Das festgelegte Modell MOD genügt somit allen in der Praxis später benötigten Varianten, wobei eine bestimmte Variante mit einer bestimmten Wertzuweisung für die symbolischen Platzhalter definiert wird.

Bei der manuellen Kodierung bzw. Programmierung in Schritt 10 muss der Entwickler dementsprechend symbolische Platzhalter verwenden, so dass der manuelle erstellte Softwarecode C ebenfalls allen benötigten Varianten genügt, also durch eine einfache Konfigurierung in einem Schritt config auf die aktuell benötigte Variante angepasst bzw. maßgeschneidert werden kann. Im Schritt config erfolgt eine Auswahl der passenden Variante durch eine entsprechende Wertzuweisung für die symbolischen Platzhalter im Softwarecode C.

Durch eine nachfolgende Kompilierung in einem Schritt comp entsteht schließlich die gewünschte Variante eines Maschinencodes, der durch das mikroprozessorgesteuerte Motorsteuergerät direkt ausführbar ist. In Fig. 1 sind als Ergebnis der Kompilierung in Schritt comp beispielhaft drei mögliche Maschinencodes ("Binärdateien") MCA, MCB und MCC dargestellt.

Ein Vorteil der beschriebenen herkömmlichen Methode besteht darin, dass der erzeugte Softwarecode C eine "Variabilität" in dem Sinne besitzt, dass ein und derselbe Softwarecode bereits allen später benötigten Varianten genügt. Der Softwarecode enthält hierfür die erwähnten symbolischen Platzhalter. In der Praxis sehr nachteilig ist jedoch der mit der manuellen Kodierung in Schritt 10 einhergehende Aufwand für den Entwickler. Die Erzeugung des vorteilhaften Softwarecodes C ist mehr oder weniger langwierig, kostenintensiv und unter Umständen auch fehlerträchtig.

Bei der nachfolgenden Beschreibung von weiteren Ausführungsbeispielen werden für gleichwirkende Verfahrensschritte die gleichen Bezugszeichen verwendet. Dabei wird im Wesentlichen nur auf die Unterschiede zu dem bzw. den bereits beschriebenen Ausführungsbeispielen eingegangen und im Übrigen hiermit ausdrücklich auf die Beschreibung vorangegangener Ausführungsbeispiele verwiesen.

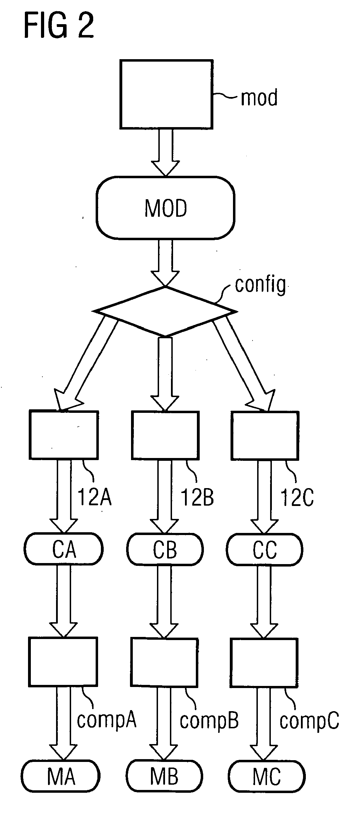

Fig. 2 veranschaulicht eine andere herkömmliche Methode zur Gewinnung mehrerer verschiedener Maschinencodes, die in Fig. 2 wieder beispielhaft als MA, MB und MC bezeichnet sind und jeweils einer von drei Varianten eines Funktionsmodells MOD entsprechen.

Bei dieser Methode wird zunächst wieder in einem Schritt mod das den gewünschten Funktionalitäten entsprechende Funktionsmodell MOD festgelegt. Das Modell MOD enthält symbolische Platzhalter und genügt somit allen benötigten Varianten.

Sodann erfolgt in einem Schritt config eine Konfigurierung des Funktionsmodells MOD durch Auswahl der aktuell passenden Variante durch eine Wertzuweisung für die symbolischen Platzhalter des Modells MOD.

Das konfigurierte und somit auf eine der Varianten festgelegte Modell wird dann in einem Schritt 12 unter Verwendung eines als "Codegenerator" bezeichneten Softwarewerkzeugs vollkommen automatisiert in Softwarecode gewandelt. Da im dargestellten Ausführungsbeispiel drei Varianten des Funktionsmodells MOD vorhanden sind, können dementsprechend durch separate automatische Codegenerierungen 12A, 12B und 12C die entsprechenden Softwarecodes CA, CB bzw. CC erzeugt werden.

Jeder dieser Softwarecodes CA, CB und CC kann dann in einem Schritt compA, compB bzw. compC kompiliert werden, um den entsprechenden Maschinencode (z. B. Binärdatei) MA, MB bzw. MC zu erzeugen.

Wenngleich bei der Methode nach Fig. 2 der große manuelle Programmieraufwand zur Erzeugung des Softwarecodes im Vergleich mit der Methode nach Fig. 1 entfällt, so ist es in der Praxis nachteilig, dass jeder erzeugte Softwarecode (hier: CA, CB oder CC) keine Variabilität mehr besitzt. In jedem der Softwarecodes sind keine Platzhalter enthalten, die durch eine nachfolgende Konfigurierung mit Werten zur Festlegung auf eine bestimmte Variante besetzt werden könnten. Jede benötigte Variante benötigt somit einen eigenen Softwarecode.

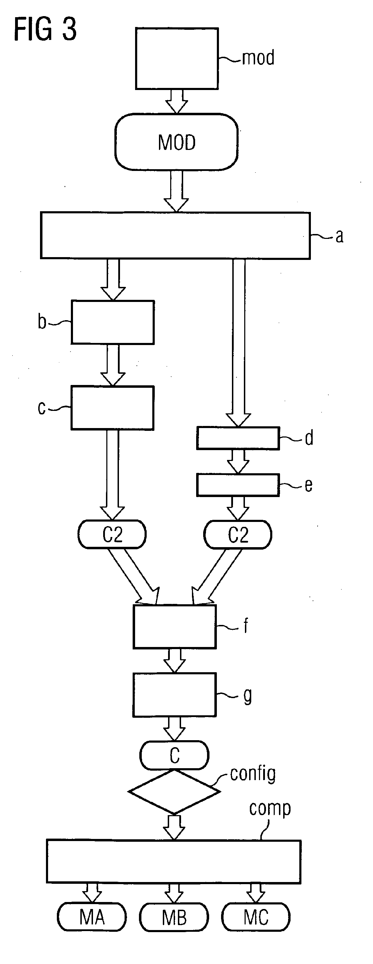

Nachfolgend wird mit Bezug auf Fig. 3 ein Ausführungsbeispiel eines erfindungsgemäßen Verfahrens zur Erzeugung eines Softwarecodes erläutert, bei welchem die Vorteile der Methode gemäß Fig. 1 mit den Vorteilen der Methode gemäß Fig. 2 kombiniert werden.

Fig. 3 veranschaulicht wieder beispielhaft die Gewinnung von drei verschiedenen Varianten eines Maschinencodes, bezeichnet mit MA, MB und MC.

Zunächst wird wieder von dem Entwickler in einem Schritt mod ein Funktionsmodell MOD festgelegt. Auf Basis dieses Modells MOD werden sodann nachfolgend beschriebene Schritte a bis g, jeweils bevorzugt zumindest teilweise automatisiert, durchgeführt.

In Schritt a werden die im Funktionsmodell MOD enthaltenen symbolischen Platzhalter identifiziert.

In Schritt b werden für diese symbolischen Platzhalter erste Werte zugewiesen, auf deren Basis in Schritt c ein erster variantenspezifischer Softwarecode C1 erzeugt wird.

Außerdem werden in Schritt d den symbolischen Platzhaltern zweite Werte zugewiesen, die von den ersten Werten verschieden sind. Basierend auf dieser Wertzuweisung von Schritt d wird dann in Schritt e ein zweiter variantenspezifischer Softwarecode C2 erzeugt.

Nach Durchführung der Schritte a bis e werden in Schritt f die in den Schritten c und e erzeugten Softwarecodes C1 und C2 miteinander verglichen, um die Variantenunterschiede im Code zu lokalisieren.

Schließlich werden in Schritt g Softwarecode-Platzhalter an den in Schritt f lokalisierten Positionen im zuvor erzeugten Softwarecode (C1 oder C2) eingefügt. Es resultiert ein Softwarecode C enthaltend Softwarecode-Platzhalter (entsprechend den symbolischen Platzhaltern im Modell MOD), der somit allen benötigten Varianten genügt.

Der weitgehend automatisiert erzeugte Softwarecode C besitzt wie der manuell erstellte Softwarecode gemäß Fig. 1 somit den Vorteil der Variabilität und kann nachfolgend durch eine einfache Konfigurierung in einem Schritt config und nachfolgende Kompilierung in einem Schritt comp in den für das Steuergerät benötigten Maschinencode MA, MB oder MC gewandelt werden. Trotz der Variabilität des erzeugten Softwarecodes C erfolgt die Erzeugung selbst mit vergleichsweise geringem Aufwand. Insbesondere entfällt der Aufwand für eine manuelle Kodierung.

Die Erzeugung der variantenspezifischen Softwarecodes C1 und C2 kann vorteilhaft unter Verwendung von kommerziell erhältlichen Codegeneratoren durchgeführt werden. Lediglich beispielhaft genannte seien die kommerziell erhältlichen Produkte "TargetLink" oder "Realtime Workshop Embedded Coder", jeweils basierend auf "Matlab/Simulink". Selbstverständlich können im Rahmen der Erfindung auch andere Codegeneratoren vorteilhaft eingesetzt werden.

Die Variabilität des zu Beginn festgelegten Modells kann sich insbesondere z. B. auf die Auswahl einzelner Datenattribute, die Grenzen von Schleifenkonstrukten oder die Auswahl gesamter Codeteile auswirken.

In einer Abwandlung des Verfahrens nach Fig. 3 ist vorgesehen, dass auf die Schritte d und e verzichtet wird und im Schritt b eine "geschickte" Wertzuweisung derart erfolgt, dass in einem modifizierten Schritt f die auf dieser Wertzuweisung beruhenden Variantenspezifika eindeutig lokalisiert werden können.

In einer anderen, oben nicht beschriebenen Modifikation ist vorgesehen, dass die mit den Schritten b, c, d und e letztlich doppelt vorgesehene Wertzuweisung noch öfter (z. B. mindestens dreimal) durchgeführt wird, wobei jedes Mal verschiedene Werte zugewiesen werden. Dies kann unter Umständen zu einer Vereinfachung des Schritts f führen.

Die Implementierung der Variantenkodierung im Modell bzw. die Codegenerator-Einstellung erfolgt gemäß einer Ausführungsform so, dass keine Code-Teile "wegoptimiert" werden, sondern alle für eine beliebige Variantenkodierung nötigen Code-Teile unabhängig von der aktuell gewählten Variantenkodierung stets im generierten Code enthalten sind. Eine Optimierung hinsichtlich nicht verwendeter Code-Teile sollte erst im Rahmen der Kompilierung erfolgen.

Falls jedoch die Implementierung der Variantenkodierung im Modell bzw. die Codegenerator-Einstellung es prinzipiell ermöglicht, dass je nach Wertzuweisung Code-Teile vom Codegenerator wegoptimiert werden, so kann dies durch das Durchlaufen aller möglichen/sinnvollen Wertzuweisungen erkannt und bei der Durchführung der Schritte f) und g) berücksichtigt werden. Der letztendlich im Schritt g) erzeugte Softwarecode mit den symbolischen Softwarecode-Platzhaltern enthält bevorzugt die Übermenge aller möglicherweise vorkommenden Code-Teile. Bei dieser Ausführung der Erfindung ist bevorzugt vorgesehen, dass die relevanten Wertebereiche aller Variantenkodierungsdaten inklusive aller relevanten Kombinationen im Rahmen der Wertzuweisung durchlaufen werden. In diesem Fall werden dann im Allgemeinen mehr als zwei Wertzuweisungen (vgl. Schritte b und d) und zugehörige Codeerzeugungen (vgl. Schritte c und e) erforderlich sein.

## Patentansprüche

1. Verfahren zur Erzeugung eines Softwarecodes (C), aus welchem durch Kompilierung (comp) ein Maschinencode (MA, MB, MC) für eine mikroprozessorgesteuerte Einrichtung, insbesondere für ein Steuergerät einer Brennkraftmaschine, erzeugbar ist, basierend auf einem Funktionsmodell (MOD) enthaltend wenigstens einen symbolischen Platzhalter für einen numerischen Wert zur numerischen Kodierung mehrerer Varianten des Funktionsmodells, umfassend die Schritte:
a) Identifizierung der symbolischen Platzhalter in dem Funktionsmodell (MOD),
b) Zuweisung von Werten für die symbolischen Platzhalter,
c) Erzeugung eines variantenspezifischen Softwarecodes (C1) basierend auf der Wertzuweisung von Schritt b),
f) Analyse des in Schritt c) erzeugten Softwarecodes (C1) zur Lokalisierung der Variantenspezifika, und
g) Einfügung von Softwarecode-Platzhaltern an den in Schritt f) lokalisierten Positionen im in Schritt c) erzeugten Softwarecode (C1).

2. Verfahren nach Anspruch 1, umfassend die Schritte:
a) Identifizierung der symbolischen Platzhalter in dem Funktionsmodell (MOD),
b) Zuweisung von ersten Werten für die symbolischen Platzhalter,
c) Erzeugung eines ersten variantenspezifischen Softwarecodes (C1) basierend auf der Wertzuweisung von Schritt b),
d) Zuweisung von zweiten Werten für die symbolischen Platzhalter, die von den ersten Werten verschieden sind,
e) Erzeugung eines zweiten variantenspezifischen Softwarecodes (C2) basierend auf der Wertzuweisung von Schritt d),
f) Vergleich der in den Schritten c) und e) erzeugten Softwarecodes (C1, C2) zur Lokalisierung der Variantenunterschiede, und
g) Einfügung von Softwarecode-Platzhaltern an den in Schritt f) lokalisierten Positionen im in Schritt c) erzeugten Softwarecode (C1).

3. Verfahren nach Anspruch 2, wobei das Funktionsmodell (MOD) mehrere symbolische Platzhalter enthält, denen in Schritt d) zweite Werte zugewiesen werden, die sich von den ersten Werten und/oder untereinander unterscheiden.

4. Verfahren nach Anspruch 3, wobei die in Schritt d) zugewiesenen zweiten Werte sich von den ersten Werten und/oder untereinander jeweils durch einen bestimmten Faktor unterscheiden, wobei die Faktoren teilerfremd gewählt werden.
